# EUROPÄISCHE PATENTSCHRIFT

(11) **EP 0 966 341 B1**
(45) Veröffentlichungstag und Bekanntmachung des Hinweises auf die Patenterteilung: **02.10.2002**
(21) Anmeldenummer: 98912377.3
(22) Anmeldetag: 23.02.1998
(51) Int. Cl.: B27K 3/50, B27K 3/52

(54) **HOLZSCHUTZMITTEL FÜR DEN NACHSCHUTZ**
WOOD PRESERVATIVE FOR SUBSEQUENT APPLICATION
PRODUIT DE PRESERVATION DU BOIS POUR APPLICATION ULTERIEURE

(30) Priorität: 06.03.1997 DE 19709116
(43) Veröffentlichungstag der Anmeldung: 29.12.1999
(73) Patentinhaber: Dr. Wolman GmbH, D-76547 Sinzheim (DE)
(72) Erfinder: GOETTSCHE, Reimer, D-76532 Baden-Baden (DE); HETTLER, Wendelin, D-76547 Sinzheim (DE); BREUER, Michael, D-76547 Sinzheim (DE); SEELMANN-EGGEBERT, Hans-Peter, D-67117 Limburgerhof (DE)
(74) Vertreter: Werner, Frank
(86) Internationale Anmeldenummer: EP9801035
(87) Internationale Veröffentlichungsnummer: WO98039146

(56) Entgegenhaltungen:
- EP-A- 0 234 461
- EP-A- 0 238 051
- AU-B- 519 146
- DE-A- 3 743 821
- DE-A- 3 835 370
- US-A- 5 342 438

## Beschreibung

Die vorliegende Erfindung betrifft die Verwendung eines Holzschutzmittels für den Nachschutz von Holz, enthaltend eine Kupferverbindung, ein Alkanolmonoamin und eine komplexbildende organische Carbonsäure oder deren Ammonium- oder Alkalisalze sowie eine Bandage für den Nachschutz von Holz, die dieses Holzschutzmittel enthält.

Zur Nachpflege im Leitungsnetz stehender Leitungsmasten der Post und Elektrizitätsversorgungsunternehmen oder ähnlicher Rundhölzer, werden insbesondere im Bereich der Erdluftzone Bandagen mit wasserlöslichen Holzschutzmitteln angelegt. Es ist bekannt, hierfür wasserlösliche Salze auf Basis von anorganischen Fluorverbindungen wie z.B. Alkalifluoride, teilweise in Verbindung mit Alkalibichromat oder Borverbindungen wie Borsäure oder Borax einzusetzen. Diese Salze sind jedoch ausschließlich gegenüber holzzerstörenden Basidiomyceten wirksam, es fehlt die Moderfäulewirksamkeit für den Einbau mit Erdkontakt. Vorgeschlagen werden als moderfäulewirksame Stoffe einerseits Dinitrophenol (Barry A. Richardson: Wood preservation - The Construction Press Ltd., Lancaster S. 181) oder Kombinationen o.g. Verbindungen mit wasserlöslichen Kupfersalzen wie z.B. Kupfersulfat oder Kupferacetat. Es sind Mischungen von Kupfersulfat auch in Kombination mit Alkalibichromat, mit Borsäure und Kupferacetat mit Alkalifluoroboraten Stand der Technik. Dinitrophenol scheidet wegen seiner Toxizität inzwischen aus.

Die wasserlöslichen o.g. Kupferverbindungen besitzen allein, aber auch in o.g. Kombinationen, kein gutes Diffusionsvermögen, um z.B. das Splintholz von Kiefernmasten, auch bei langen Standzeiten, ausreichend zu durchdringen und den Kern zu erreichen.

Holzschutzmittel auf Basis von Kupfer und Aminen als Komplexbildner wurden für die großtechnische Imprägnierung, insbesondere Kesseldrucktränkung, vorgeschlagen.

Die EP-B- 211 181 betrifft ein Holzschutzmittel auf Basis eines Kupfersalzes und Monoethanolamin zur Kesseldruckimprägnierung von Holz.

Die EP-B 270 848 beschreibt ein Holzschutzmittel auf der Basis einer Kupferverbindung, einer Carbonsäure und eines aliphatischen Polyamins für die Kesseldruckimprägnierung.

Die EP-A 423 674 beschreibt ein Holzschutzmittel auf der Basis eines Metallsalzes einer N-Organyldiazeniumdioxy-Verbindung und einem komplexbildenden polymeren Amin für das Kesseldruckverfahren.

Allen oben beschriebenen Holzschutzmitteln ist gemeinsam, daß sie ein hohes Fixierungsvermögen für das Kupfer im Holz aufweisen. Hierdurch wird das Diffusionsvermögen des Kupfers eingeschränkt, weshalb diese Systeme für den Nachschutz von Holz ungeeignet sind.

"Bekannte, aktuell verwendete Systeme für den Nachschutz von Holz enthalten z.B. Kombinationen von Kupfernaphthenat, Bor- und Fluorverbindungen. Ein Beispiel für diesen hauptsächlich in den USA verwendeten Produkttyp ist CuRAP 20 (Hersteller: ISK Biotech), eine Paste, die 18,16 % aminbasiertes Kupfernaphthenat und 40 % Natriumtetraborat Decahydrat enthält. Untersuchungen an Masten (Holzart Douglasie bzw. Kiefer), die mit diesem Produkt behandelt worden waren, zeigten nach 1- bis 3-jähriger Standzeit, daß Kupfer zum überwiegenden Teil praktisch nur oberflächennah (0-10 mm) in Holz verteilt ist (bei untersuchten Eindringtiefen bis 25 mm) und diese Produkte somit nur ein sehr eingeschränktes Diffusionsvermögen für Kupfer aufweisen (Conserving energy by environmentally acceptable practices in maintaining and procuring transmission poles. 15th annual report, September 1995, J. J. Morrell, Oregon State University, Corvallis, Oregon.)"

Die US 5,342,438 beschreibt ein nicht wasserverdünnbares Holzschutzmittel für den Nachschutz, das aus einem Amin-Kupfer-Komplex und mindestens Natriumborat oder Natriumfluorid besteht.

Die WO 96/23636 beschreibt Holzschutzmittel in Pastenform, die eine fungizide Metallverbindung und eine fungizide Borverbindung enthalten. Die Metallverbindungen umfassen auch Kupfer, komplexiert mit Aminocarbonsäuren oder Polycarbonsäuren.

Die WO 96/23635 beschreibt ein Holzschutzmittel, das ein Metallchelat enthält. Beschrieben werden Kupferkomplexe mit Aminosäuren, Iminodiessigsäure, Ethylendiaminotetraessigsäure, Dicarbonsäuren und Polyphosphaten.

Die Kupferkomplexe mit stickstoffhaltigen komplexbildenden Polycarbonsäuren, wie z.B. Imidodiessigsäure, Ethylendiaminotetraessigsäure, Nitrilotriessigsäure fixieren in Holz nicht, sie werden vollkommen aus dem Holz ausgewaschen (WO 96/23635, Seite 20, Tabelle 6) und diffundieren damit bei Feuchtebeanspruchung (Bewitterung, Erdkontakt) aus Holz in die Umwelt, dies stellt nicht nur eine verstärkte Umweltbelastung dar, sondern das Holz besitzt mit der Zeit keinen ausreichenden Schutz mehr gegenüber der Moderfäule. Dies gilt auch für andere komplexierende Säuren wie die Hydroxycarbonsäuren, z.B. für Zitronensäure, Apfelsäure, Weinsäure.

Kupferchelate mit anderen Dicarbonsäuren, z.B. Phthalsäure, Maleinsäuren besitzen dagegen kein ausreichendes Diffusionsvermögen.

Formulierungen allein auf Basis dieser genannten Stoffe sind daher nicht optimal geeignet für den Nachschutz von Holz.

Die deutsche Patentanmeldung DE-A 196 08 435 beschreibt die Verwendung eines Holzschutzmittels für den Nachschutz von Holz, das eine Kupferverbindung, ein Polyamin und ein anorganisches Fungizid enthält. In einem Beispiel werden noch Ethanolamin und eine komplexbildende Carbonsäure mitverwendet.

Aufgabe der vorliegenden Erfindung war es, ein Holzschutzmittel für den Nachschutz von Holz zur Verfügung zu stellen, das ein gutes Diffusionsvermögen des Kupfers im Holz aufweist, bei gleichzeitigem guten Schutz gegen Moderfäulnis und Basidiomyceten.

Weitere Aufgabe der vorliegenden Erfindung war es, eine Bandage, die dieses Holzschutzmittel enthält, für den Nachschutz von Holz zur Verfügung zu stellen.

Demgemäß wurde ein Holzschutzmittel gefunden auf Basis einer Kupferverbindung, eines Alkanolmonoamins und einer komplexbildenden organischen Carbonsäure oder deren Ammonium- oder Alkalisalze, gegebenenfalls weiterer Hilfsmittel und gegebenenfalls Wasser für den Nachschutz von Holz.

Einfachheitshalber kann die Kupferverbindung auch ganz oder teilweise als Salz der komplexbildenden organischen Carbonsäure vorliegen (z.B. Kupfercitrat, Kupfertartrat).

Als Ergänzung zur Verbesserung der Wirksamkeit können dem Holzschutzmittel auch anorganische Fungizide zugesetzt werden.

Diese Holzschutzmittel eignen sich besonders für den Nachschutz und die Nachpflege von Holz und werden angewendet als Bandagen, im Impfstichverfahren, Bohrlochverfahren und Pastenverfahren.

Sie durchdringen das Splintholz bei Anwesenheit von Feuchtigkeit, z.B. Erdkontakt, und weisen eine gute Tiefenwirkung auf.

Als Kupferverbindungen können wasserlösliche oder -unlösliche Verbindungen, z.B. Kupfersulfat, Kupferacetat, Kupfercitrat, Kupfertartrat, Kupfernaphthenat, Kupferhydroxid, Kupferhydroxycarbonat, Kupferoxychlorid, Kupferoxid, Kupferborat, Kupferfluorid, Kupferfluoroborat, Bis(N-Cyclohexyldiazeniumdioxy) -Kupfer oder deren Gemische verwendet werden.

Bevorzugt sind Kupferhydroxycarbonat, Kupferhydroxid sowie deren Gemische.

Besonders bevorzugt wird Kupferhydroxid, speziell stabilisiertes Kupferhydroxyd (Norddeutsche Affinerie) verwendet.

Die Wirkung des Holzschutzmittels kann durch Salze des N-Cyclohexyldiazeniumdioxids und anderer Diazeniumdioxide, z.B. als Kaliumsalz, verbessert werden, wobei sich mit Kupferverbindungen in der Regel das obengenannte Bis(N-Cyclohexyldiazeniumdioxy)-Kupfer bildet.

Die Mischungen enthalten 0,25 bis 15 Gew.-% Kupfer berechnet als Element. Ein Teil des Kupfers kann z.B. auch durch eine entsprechende Zinkverbindung ersetzt werden.

Als Alkanolmonoamine können verwendet werden Monoalkanolmonoamine, Dialkanolmonoamine, Trialkanolmonoamine mit 2 bis 18 C-Atomen sowie N-C₁-C₄-Monoalkyl-monoalkanolmonoamine, N-C₁-C₄-Dialkylmonoalkanolmonoamine, N-C₁-C₄-Monoalkyldialkanolmonoamine und deren Gemische.

Geeignete Beispiele sind Monoethanolamin, Diethanolamin, Triethanolamin, 3-Aminopropanol, Monoisopropanolamin, 4-Aminobutanol, Monomethylethanolamin, Dimethylethanolamin, Triethylethanolamin, Monoethylethanolamin, N-Methyldiethanolamin und deren Gemische.

Bevorzugt werden Monoethanolamin, Diethanolamin, Triethanolamin, Isopropanolamin und deren Gemische verwendet.

Besonders bevorzugt wird Monoethanolamin verwendet.

Als komplexbildende organische Carbonsäuren werden beispielsweise Hydroxycarbonsäuren, Aminocarbonsäuren, stickstoffhaltige Polycarbonsäuren, deren Ammonium- oder Alkalisalze und deren Gemische verwendet.

Als geeignete Hydroxycarbonsäuren können z.B. Glykolsäure, Milchsäure, Weinsäure, Zitronensäure, Apfelsäure, deren Ammonium- oder Alkalisalze und deren Gemische verwendet werden.

Auch Aminosäuren wie z.B. Glycin, Sarkosin, deren Ammonium- oder Alkalisalze und deren Gemische können verwendet werden.

Als geeignete stickstoffhaltige komplexbildende Polycarbonsäuren können z.B. Nitrilotriessigsäure (NTA), Ethylendiamintetraessigsäure (EDTA), Diethylentriaminpentaessigsäure (DPTA), Propylendiamintetraessigsäure (PDTA), Hydroxyethylethylendiamintriessigsäure (HEDTA), β-Alanindiessigsäure, deren Ammonium- oder Alkalisalze und deren Gemische verwendet werden.

Bevorzugt werden Hydroxycarbonsäuren wegen ihrer guten Umweltverträglichkeit verwendet. Besonders bevorzugt wird hierbei die Zitronensäure.

Geeignete anorganische Fungizide sind Borverbindungen wie Alkaliborate, Aminoborate, Borsäure, Borsäureester und B₂O₃; Fluoride wie Alkalifluoride, Alkalibifluoride, Siliciumfluoride, Ammoniumfluoride, Ammoniumhydrogenfluoride; Fluoroborate; Fluorophosphate, Difluorophosphate und deren Gemische.

Bevorzugt sind Natriumfluoroborat, Kaliumfluoroborat, Borsäure, Natriumfluorid und deren Gemische.

Die Holzchutzmittel der vorliegenden Erfindung noch Hilfsmittel wie Wasser, Bindemittel, Pastenbildner, Mono-, Di- und Trialkylamine und anorganische Basen, aliphatische Carbonsäuren, deren Ammonium- oder Alkalisalze, Weichmacher, Füllstoffe, Netzmittel, Verdickungsmittel und deren Gemische enthalten.

Die Holzschutzmittel können zusätzlich Wasser, das der Einstellung der Viskosität und der Handhabung dient, enthalten.

Als Bindemittel und Pastenbildner können verwendet werden z.B. Acrylatharze in Form von wäßrigen Dispersionen oder Pulvern; Plastisole, Aminoplaste, Phenoplaste, PVC mit Weichmachern und deren Gemische.

Als anorganische Basen können Ammoniak, Alkalilauge, Amine oder deren Gemische mitverwendet werden. Geeignete Amine sind desweiteren Mono-, Di- und Trialkylamine.

Zur Verbesserung der Flexibilität des auf ein Trägermaterial aufgetrockneten Holzschutzmittels können zusätzlich aliphatische C₅-C₂₀-Carbonsäuren wie Hexansäure, Heptansäure, Octansäure, Nonansäure, Decansäure, 2-Ethylenpentansäure, 2-Ethylhexansäure, 2-Ethylheptansäure, Isooctansäure, Isononansäure, Isodecansäure, Versaticsäuren (stark verzweigte Monocarbonsäuren), Dicarbonsäuren (C₅-C₂₀) z.B. Decandicarbonsäure, Sebacinsäure verwendet werden. Geeignet sind auch Polycarbonsäuren wie Polyacrylsäuren bzw. Copolymere der Acrylsäure mit z.B. Maleinsäure und Naphtensäuren.

Geeignete Holzschutzmittel enthalten beispielsweise

| | |
|---|---|
| 2-50 Gew.-%, | bevorzugt 5-40 Gew.-% einer Kupferverbindung, |
| 2-60 Gew.-%, | bevorzugt 5-50 Gew.-% eines Alkanolmonoamins, |
| 1-65 Gew.-%, | bevorzugt 2-55 Gew.-% einer komplexbildenden organischen Carbonsäure, deren Ammonium- oder Alkalisalze, |
| 0-50 Gew.-%, | bevorzugt 5-50 Gew.-% eines anorganischen Fungizids, |
| 0-25 Gew.-%, | bevorzugt 1-20 Gew.-% eines Alkalisalzes des N-Cyclohexyldiazeniumdioxids, |
| 0-25 Gew.-%, | bevorzugt 1-20 Gew.-% eines Hilfsmittels, |
| 0-50 Gew.-%, | bevorzugt 1-40 Gew.-% Wasser, |

wobei die Summe aller Komponenten 100 Gew.-% ergibt.

Folgende Holzschutzmittel haben sich bewährt:

| | |
|---|---|
| a) | 5-40 Gew.-% einer Kupferverbindung, |
| | 5-60 Gew.-% eines Alkanolamins, |
| | 5-35 Gew.-% einer komplexbildenden organischen Carbonsäure, |
| | 5-50 Gew.-% eines anorganischen Fungizids, |
| | 2,5-50 Gew.-% Wasser, |

oder speziell bei Einsatz von Bindemitteln und Pastenbildnern

| | |
|---|---|
| a) | 5-40 Gew.-% einer Kupferverbindung, |
| | 5-60 Gew.-% eines Alkanolamins, |
| | 5-35 Gew.-% einer komplexbildenden organischen Carbonsäure, |
| | 5-50 Gew.-% eines anorganischen Fungizids, |
| | 0- 5 Gew.-% eines Alkalisalzes des N-Cyclohexyldiazeniumdioxyls, |
| | 5-40 Gew.-% eines Hilfsmittels, |
| | 0-30 Gew.-% Wasser, |

Die Herstellung der Holzschutzmittel, die als Konzentrate oder verdünnt mit Wasser als viskose Lösungen oder in Form von Pasten, gegebenenfalls auch als Festsalz vorliegen können, erfolgt am besten, indem ein Alkanolmonoamin und eine komplexbildende organische Carbonsäure, gegebenenfalls mit Wasser und/oder Hilfsmitteln, gelöst werden und mit der Kupferverbindung unter Rühren versetzt werden.

Die Kupferverbindungen lösen sich dann in dieser Mischung unter Komplexbildung gut auf.

Diese Vormischung kann bereits als hochkonzentrierte Paste vorliegen, der dann die anorganischen Fungizide, sowie gegebenenfalls weitere Hilfsmittel, unter Rühren zugesetzt werden.

Durch Veränderung des Alkanolamin/Säureverhältnis kann die Restfixierung des Kupfers den anwendungstechnischen Bedingungen angepaßt werden.

Der pH-Wert des Holzschutzmittels in Form der Konzentrate oder Pasten liegt im allgemeinen zwischen pH 7-12. Die Konzentrate oder Pasten können je nach Anwendung einerseits direkt oder unter Bindemittelzusatz auf oder in ein geeignetes Trägermaterial aufoder eingebracht werden. Geeignete Trägermaterialien sind z.B. Kunststoffolien oder Vliese z.B. aus Glasfaser, Polypropylen, Polyester-, Viskosefaser, Schaumstoff oder anderen porösen Kunststoffmassen. Hierbei werden die Konzentrate z.B. durch Walzen (Kalandrieren) auf das Trägermaterial aufgebracht. Als Bindemittel können verwendet werden z.B. Acrylatharze in Form von wäßrigen Dispersionen, Pulvern; Plastisole, Aminoplaste, Phenoplaste, PVC mit Weichmachern.

Das System Konzentrat/Trägermaterial wird meist anschließend einer Trocknung z,B. Lufttrocknung oder z.B. in einem Ofen bei Temperaturen von ca. 100-180°C, unterworfen, wobei das Konzentrat hochviskos auftrocknet und an das Trägermaterial gebunden wird; diese Bindung kann gegebenenfalls durch o.g. Bindemittelzusatz verbessert werden, gleichzeitig kann hierdurch, wenn notwendig, die Holzschutzmittelabgabe bei hoher Bindemitteldosierung nach Anwendung verzögert werden.

Die Konzentrate, insbesondere bei Zusatz von Bindemittel, können auch in Form von Strängen gepreßt, getrocknet und auf Länge geschnitten werden, um Salzpatronen für die Einlagerung in Holz über Bohrlöcher zu erhalten, z.B. beim Bohrlochverfahren. Es ist auch möglich, Patronen aus pulverförmigen Mischungen z.B. bei der Verwendung sprühgetrockneter Konzentrate oder der Verwendung pulverförmiger Rohstoffe in Form von Salzpreßlingen zu fertigen.

Die diffusionsfähigen Pasten und Konzentrate bzw. Patronen können in den verschiedenen Verfahren des Nachschutzes und der Nachpflege angewendet werden, wenn bei besonders gefährdeten Holzbauteilen in bestimmten Bereichen größere Schutzmitteleinbringmengen und Eindringtiefen erreicht werden sollen.

Die Pasten eignen sich für das Bandagenverfahren, wie Einfach-Bandagen oder Mehrfach-Bandagen, das Impfstichverfahren, Bohrlochverfahren und das Pastenverfahren.

Die Anwendung erfolgt in Form vorbeugender oder auch bekämpfender Schutzbehandlungen, um
a) im übrigen nicht mit Holzschutzmitteln behandelte Hölzer nur in bestimmten Abschnitten dauerhaft zu schützen, z.B. Deckenbalkenköpfe;
b) in den Gefahrenbereichen die bei der Erstbehandlung erreichten Einbringmengen oder Eindringtiefen zu erhöhen;
c) in bereits verbautem Holz nach längerer Standdauer (Gebrauchsdauer) den Schutzmittelgehalt aus dem Grundschutz zu ergänzen bzw. anzuheben;
d) bei verbauten Holzteilen auch jene Bereiche zu erreichen, insbesondere im Verlauf einer Bekämpfungsmaßnahme, die mit üblichen Tränkverfahren nicht zu erfassen sind.

Die Erfindung wird anhand folgender Beispiele beschrieben:

Für die Versuche wurden die Pasten/Konzentrate in definierten Mengen auf Schaumstoff als Träger aufgebracht. Der Schaumstoff mit der Paste durchlief dann einen Trocknungsprozeß. Die erhaltene Bandage wurde nach der Herstellung an erdverbauten Rundhölzern aus Kiefernholz in der Erd-Luftzone angelegt. Dieser Bereich wurde anschließend mit einer selbstklebenden PVC-Folie umwickelt und damit gegen das Eindringen von Wasser von außen geschützt.

Nach einer Standdauer von 12 Monaten wurden die Rundhölzer ausgegraben, im Bereich der Erd-Luftzone mehrfach senkrecht zur Maserung aufgeschnitten, die Rundholzschalen entnommen und die Kupfereindringung durch Reagenzieren (Besprühen) mit einer 0,2 %igen wäßrigen Lösung von 4-(Pyridyl-(2)-azo)-resorcin Mononatriumsalz (Kupferreagenz) bestimmt.

Für die Versuche wurden Kieferrundhölzer mit einem Durchmesser von mindestens 20 cm und Splintholzbreiten von ≥ 3 cm verwendet. Es wurde jeweils eine Menge von ca. 500 g Konzentrat/Salzmischung pro Bandage aufgebracht, das Trägermaterial mit dem Wirkstoffkonzentrat wurde so eingebaut, daß es sich ca. 10 cm über der Erdgleiche und ca. 30 cm unter der Erdgleiche befand; die Abdeckfolie überlappte diesen Bereich um jeweils mindestens 10 cm. Die Bandagenabmessung betrug hierbei 40 cm x 80 cm. Pro Formulierung wurden mindestens 2 Bandagen an verschiedenen Rundhölzern angelegt und auf das Eindringvermögen geprüft.

### Beispiel A (nicht erfindungsgemäß)

35 % Kupfersulfat
32 % Kaliumbichromat
30 % Borsäure
3 % Natriumhydrogensulfat

Das Salz wurde gemahlen, mit Wasser, Acrylatdispersion (50 %ige wäßrige Dispersion eines Copolymers aus n-Butylacrylat und Styrol) als Bindemittel angepastet (10 T Konzentrat/2 T Wasser/3 T Bindemittel), auf den Schaumstoff als Träger aufgebracht und bei 120°C mindestens 15 min. im Durchlauf getrocknet.

Die erhaltenen Bandagen wurden an Rundhölzer angelegt. Die Hölzer wurden nach 12 Monaten Standdauer ausgebaut, nach Aufschneiden wurde die mittlere Kupfereindringung ermittelt.

| Kupfereindringung nach 12 Monaten Standdauer | | |
|---|---|---|
| Rundholz 1a | mittlere Splintbreite | ca. 35 mm |
| | mittlere Kupfereindringung | ca. 9 mm |
| | Der Kern wurde an keiner Stelle erreicht | |
| | | |
| Rundholz 2a | mittlere Splintbreite | ca. 38 mm |
| | mittlere Kupfereindringung | ca. 12 mm |
| | Der Kern wurde an keiner Stelle erreicht | |

### Beispiel B (nicht erfindungsgemäß)

50 % Kupfersulfat
45 % Borsäure
5 % Natriumhydrogensulfat

Das Salz wurde nach Mahlen mit Wasser, Acrylatdispersion (50 %ige wäßrige Dispersion eines Copolymers aus n-Butylacrylat und Styrol) als Bindemittel angepastet (10 T Konzentrat/2 T Wasser/3 T Bindemittel), auf den Schaumstoff aufgebracht und bei Raumtemperatur mindestens 24 h getrocknet. Die Bandagen wurden angelegt.

| Kupfereindringung nach 12 Monaten Standdauer | | |
|---|---|---|
| Rundholz 1b | mittlere Splintbreite | ca. 41 mm |
| | mittlere Kupfereindringung | ca. 7 mm |
| | Der Kern wurde an keiner Stelle erreicht | |
| | | |
| Rundholz 2b | mittlere Splintbreite | ca. 37 mm |
| | mittlere Kupfereindringung | ca. 9 mm |
| | Der Kern wurde an keiner Stelle erreicht | |

### Beispiel C (nicht erfindungsgemäß)

50 % Kupfersulfat
50 % Natriumfluoroborat

Das Salz wird nach Mahlen mit Wasser, Acrylatdispersion (50 %ige wäßrige Dispersion eines Copolymers aus n-Butylacrylat und Styrol) als Bindemittel angepastet (10 T Konzentrat(2 T Wasser/3 T Bindemittel), auf den Schaumstoff aufgebracht und bei Raumtemperatur mindestens 24 h getrocknet. Die Bandage wurde angelegt.

| Kupfereindringung nach 12 Monaten Standdauer | | |
|---|---|---|
| Rundholz 1c | mittlere Splintbreite | ca. 32 mm |
| | mittlere Kupfereindringung | ca. 12 mm |
| | Der Kern wurde an keiner Stelle erreicht | |
| | | |
| Rundholz 2c | mittlere Splintbreite | ca. 43 mm |
| | mittlere Kupfereindringung | ca. 10 mm |
| | Der Kern wurde an keiner Stelle erreicht | |

### Beispiel D (nicht erfindungsgemäß)

35 % Kupferacetat
65 % Kaliumfluoroborat

Das Salz wurde nach Mahlen mit Wasser, Acrylatdispersion (50 %ige wäßrige Dispersion eines Copolymers aus n-Butylacrylat und Styrol) als Bindemittel angepastet (10 T Konzentrat(2 T Wasser/3 T Bindemittel) auf den Schaumstoff aufgebracht und bei Raumtemperatur mindestens 24 h getrocknet. Die Bandage wurde angelegt.

| Kupfereindringung nach 12 Monaten Standdauer | | |
|---|---|---|
| Rundholz 1d | mittlere Splintbreite | ca. 37 mm |
| | mittlere Kupfereindringung | ca. 7 mm |
| | Der Kern wurde an keiner Stelle erreicht | |
| | | |
| Rundholz 2d | mittlere Splintbreite | ca. 42 mm |
| | mittlere Kupfereindringung | ca. 11 mm |
| | Der Kern wurde an keiner Stelle erreicht | |

### Beispiel E (nicht erfindungsgemäß)

41,55 Gew.-% Wasser, dem.
10,70 Gew.-% Natriumhydroxid
28,00 Gew.-% Zitronensäure Monohydrat
9,75 Gew.-% Kupferhydroxid stabilisiert
10,00 Gew.-% Polybor (Na₂B₈0₁₃ x 4 H₂O)

### Kupfergehalt des Konzentrates: 6,1 %

Die Auswaschung gemäß EN 84 (1 Woche Fixierung, 3,3 % Lösungskonzentration) beträgt für Kupfer: 94,5 %

### Beispiel F (nicht erfindungsgemäß)

37,43 Gew.-% Wasser, dem.
16,00 Gew.-% Natriumhydroxid
26,82 Gew.-% Apfelsäure
9,75 Gew.-% Kupferhydroxid stabilisiert
10,00 Gew.-% Polybor (Na₂B₈0₁₃ x 4 H₂O)

### Kupfergehalt des Konzentrates: 6,1 %

Die Auswaschung gemäß EN 84 (1 Woche Fixierung, 3,3 % Lösungskonzentration) beträgt für Kupfer: 67,5 %

### Beispiel G (nicht erfindungsgemäß)

52,73 Gew.-% Wasser
10,70 Gew.-% Natriumhydroxid
26,82 Gew.-% Apfelsäure
9,75 Gew.-% Kupferhydroxid

### Der Kupfergehalt des Konzentrates: 6,1 %

Die Auswaschung gemäß EN 84 (1 Woche Fixierung; 3,3 % Lösungskonzentration) beträgt für Kupfer: 71,5 %

### Beispiel H (nicht erfindungsgemäß)

51,55 Gew.-% Wasser
10,70 Gew.-% Natriumhydroxid
28,00 Gew.-% Zitronensäure Monohydrat
9,75 Gew.-% Kupferhydroxid

### Der Kupfergehalt des Konzentrates: 6,1 %

Die Auswaschung gemäß EN 84 (1 Woche Fixierung; 3,3 % Lösungskonzentration) beträgt für Kupfer: 97,5 %

### Erfindungsgemäße Beispiele

### Beispiel 1

31,25 Gew.-% Monoethanolamin
30,93 Gew.-% Wasser
15,63 Gew.-% Apfelsäure
22,19 Gew.-% Kupferhydroxidcarbonat

### Der Kupfergehalt des Konzentrates: 12,5 %

Die Auswaschung gemäß EN 84 (1 Woche Fixierung; 1,6 % Lösungskonzentration) beträgt für Kupfer 37,5 %

Das Konzentrat wurde durch Rühren hergestellt, auf Schaumstoff aufgebracht und bei Raumtemperatur mindestens 24 h getrocknet. Die Bandage wurde angelegt.

| Kupfereindringung nach 12 Monaten Standdauer | | |
|---|---|---|
| Rundholz II 1 | mittlere Splintbreite | ca. 36 mm |
| | mittlere Kupfereindringung: praktisch identisch mit dem Splintholzbereich | |
| | Der Kern wird erreicht | |
| | | |
| Rundholz II 2 | mittlere Splintbreite | ca. 32 mm |
| | mittlere Kupfereindringung: praktisch identisch mit dem Splintholzbereich | |
| | Der Kern wird erreicht | |

### Beispiel 2

35,00 Gew.-% Monoethanolamin
30,31 Gew.-% Wasser
12,50 Gew.-% Zitronensäure Monohydrat
22,19 Gew.-% Kupferhydroxidcarbonat

### Der Kupfergehalt des Konzentrates: 12,5 %

Die Auswaschung gemäß EN 84 (1 Woche Fixierung; 1,6 % Lösungskonzentration) beträgt für Kupfer 38,1 %

Das Konzentrat wurde durch Rühren hergestellt, auf Schaumstoff aufgebracht und bei Raumtemperatur mindestens 24 h getrocknet. Die Bandage wurde angelegt.

| Kupfereindringung nach 12 Monaten Standdauer | | |
|---|---|---|
| Rundholz II 1 | mittlere Splintbreite | ca. 37 mm |
| | mittlere Kupfereindringung: praktisch identisch mit dem Splintholzbereich | |
| | Der Kern wird erreicht | |
| | | |
| Rundholz II 2 | mittlere Splintbreite | ca. 34 mm |
| | mittlere Kupfereindringung: praktisch identisch mit dem Splintholzbereich | |
| | Der Kern wird erreicht | |

### Beispiel 3

25,00 Gew.-% Monoethanolamin
21,50 Gew.-% Wasser
12,50 Gew.-% Apfelsäure
16,00 Gew.-% Kupferhydroxid stabilisiert
25,00 Gew.-% Borsäure

### Kupfergehalt des Konzentrates: 10 %

Die Auswaschung gemäß EN 84 (1 Woche Fixierung, 2 % Lösungskonzentration) beträgt für Kupfer: 35,3 %

Das Konzentrat wurde durch Rühren hergestellt und auf Schaumstoff aufgebracht und bei Raumtemperatur mindestens 24 h getrocknet. Die Bandage wurde angelegt.

| Kupfereindringung nach 12 Monaten Standdauer | | |
|---|---|---|
| Rundholz II 1 | mittlere Splintbreite | ca. 30 mm |
| | mittlere Kupfereindringung: praktisch identisch mit dem Splintholzbereich | |
| | Der Kern wird erreicht | |
| | | |
| Rundholz II 2 | mittlere Splintbreite | ca. 42 mm |
| | mittlere Kupfereindringung: praktisch identisch mit dem Splintholzbereich | |
| | Der Kern wird erreicht | |

### Beispiel 4

19,00 Gew.-% Monoethanolamin
21,00 Gew.-% Wasser
40,00 Gew.-% Kupfercitrat (ca. 35 % Cu)
20,00 Gew.-% Borsäure

### Kupfergehalt des Konzentrates: 14 %

Die Auswaschung gemäß EN 84 (1 Woche Fixierung, 1,5 % Lösungskonzentration) beträgt für Kupfer: 44,0 %

Das Konzentrat wurde durch Rühren hergestellt und auf Schaumstoff aufgebracht und bei Raumtemperatur mindestens 24 h getrocknet.
Die Bandage wurde angelegt.

| Kupfereindringung nach 12 Monaten Standdauer | | |
|---|---|---|
| Rundholz II 1 | mittlere Splintbreite | ca. 33 mm |
| | mittlere Kupfereindringung: praktisch identisch mit dem Splintholzbereich | |
| | Der Kern wird erreicht | |
| | | |
| Rundholz II 2 | mittlere Splintbreite | ca. 37 mm |
| | mittlere Kupfereindringung: praktisch identisch mit dem Splintholzbereich | |
| | Der Kern wird erreicht | |

### Beispiel 5

25,00 Gew.-% Monoethanolamin
21,50 Gew.-% Wasser
12,50 Gew.-% Zitronensäure Monohydrat
16,00 Gew.-% Kupferhydroxid stabilisiert
25,00 Gew.-% Borsäure

### Kupfergehalt des Konzentrates: 10 %

Die Auswaschung gemäß EN 84 (1 Woche Fixierung, 2 % Lösungskonzentration) beträgt für Kupfer: 38,3 %

Das Konzentrat wurde durch Rühren hergestellt und auf Schaumstoff aufgebracht und bei Raumtemperatur mindestens 24 h getrocknet. Die Bandage wurde angelegt.

| Kupfereindringung nach 12 Monaten Standdauer | | |
|---|---|---|
| Rundholz II 1 | mittlere Splintbreite | ca. 31 mm |
| | mittlere Kupfereindringung: praktisch identisch mit dem Splintholzbereich | |
| | Der Kern wird erreicht | |
| | | |
| Rundholz II 2 | mittlere Splintbreite | ca. 39 mm |
| | mittlere Kupfereindringung: praktisch identisch mit dem Splintholzbereich | |
| | Der Kern wird erreicht | |

### Beispiel 6

28,00 Gew.-% Monoethanolamin
20,50 Gew.-% Wasser
10,00 Gew.-% Zitronensäure Monohydrat
16,00 Gew.-% Kupferhydroxid stabilisiert
25,00 Gew.-% Natriumfluorid

### Kupfergehalt des Konzentrates: 10 %

Die Auswaschung gemäß EN 84 (1 Woche Fixierung, 2,0 % Lösungskonzentration) beträgt für Kupfer: 35,0 %

Das Konzentrat wurde durch Rühren hergestellt und auf Schaumstoff aufgebracht und bei Raumtemperatur mindestens 24 h getrocknet. Die Bandage wurde angelegt.

| Kupfereindringung nach 12 Monaten Standdauer | | |
|---|---|---|
| Rundholz II 1 | mittlere Splintbreite | ca. 35 mm |
| | mittlere Kupfereindringung: praktisch identisch mit dem Splintholzbereich | |
| | Der Kern wird erreicht | |
| | | |
| Rundholz II 2 | mittlere Splintbreite | ca. 40 mm |
| | mittlere Kupfereindringung: praktisch identisch mit dem Splintholzbereich | |
| | Der Kern wird erreicht | |

### Beispiel 7

8,80 Gew.-% Monoethanolamin
7,80 Gew.-% Wasser
18,60 Gew.-% Kupfercitrat (ca. 35 % Cu)
9,00 Gew.-% Borsäure
22,50 Gew.-% Natriumfluorid
33,30 Gew.-% Polyvinylchlorid-Pulver (Vinnolit P 4472 der Fa. Vinnolit)/Bis(2-ethylhexyl)-phthalat-Vormischung (Mischungsverhältnis: ca. 4:5)

Eine Paste wurde durch Rühren hergestellt, auf Schaumstoff aufgebracht und bei 130°C mindestens 15 min. im Durchlaufofen getrocknet. Die Bandage wurde angelegt.

| Kupfereindringung nach 12 Monaten Standdauer | | |
|---|---|---|
| Rundholz II 1 | mittlere Splintbreite | ca. 40 mm |
| | mittlere Kupfereindringung: praktisch identisch mit dem Splintholzbereich | |
| | Der Kern wird erreicht | |
| | | |
| Rundholz II 2 | mittlere Splintbreite | ca. 39 mm |
| | mittlere Kupfereindringung: praktisch identisch mit dem Splintholzbereich | |
| | Der Kern wird erreicht | |

Weitere Beispiele mit gutem Diffusionsvermögen

### Beispiel 8

26,50 Gew.-% Monoethanolamin
9,50 Gew.-% Wasser
23,00 Gew.-% Glycolsäure 57 % (handelsüblich)
16,00 Gew.-% Kupferhydroxid stabilisiert
25,00 Gew.-% Borsäure

### Beispiel 9

25,00 Gew.-% Monoethanolamin
22,00 Gew.-% Milchsäure 80 % (handelsüblich)
12,00 Gew.-% Wasser
16,00 Gew.-% Kupferhydroxid stabilisiert
25,00 Gew.-% Borsäure

### Beispiel 10

25,00 Gew.-% Monoethanolamin
24,75 Gew.-% Wasser
12,50 Gew.-% Weinsäure
17,75 Gew.-% Kupferhydroxidcarbonat
20,00 Gew.-% Polybor (Na₂B₈0₁₃ x 4 H₂O)

## Patentansprüche

1. Verwendung eines Holzschutzmittels für den Nachschutz von Holz, bestehend aus einer Kupferverbindung, einem Alkanolmonoamin, einer komplexbildenden organischen Carbonsäure oder deren Ammonium- oder Alkalisalze, ggf. einem anorganischen Fungizid, ausgewählt aus der Gruppe Borverbindungen, Fluoride, Fluoroborate, Fluorophosphate, Difluorophosphate und deren Gemische, ggf. einem Hilfsmittel aus der Gruppe Wasser, Bindemittel, Pastenbildner, Mono-, Di- und Trialkylamine sowie anorganische Basen, aliphatische Carbonsäuren, Weichmacher, Füllstoffe, Netzmittel, Verdickungsmittel und deren Gemische, in einem Verfahren, ausgewählt aus der Gruppe Bandageverfahren, Impfstichverfahren, Bohrlochverfahren und Pastenverfahren.

2. Verwendung eines Holzschutzmittels nach Anspruch 1, in dem die Kupferverbindung aus der Gruppe Kupfersulfat, Kupferacetat, Kupfercitrat, Kupfernaphthenat, Kupferhydroxid, Kupferhydroxycarbonat, Kupferoxychlorid, Kupferoxid, Kupferborat, Kupferfluorid, Kupferfluoroborat, Bis(N-Cyclohexyldiazeniumdioxy)-Kupfer und deren Gemische ausgewählt ist.

3. Verwendung eines Holzschutzmittels nach einem der Ansprüche 1 bis 2, in dem das Alkanolmonoamin aus der Gruppe Monoethanolamin, Diethanolamin, Triethanolamin, Isopropanolamin, Methylethanolamin und deren Gemische ausgewählt ist.

4. Verwendung eines Holzschutzmittels nach Anspruch 3, in dem das Alkanolmonoamin aus der Gruppe Monoethanolamin, Diethanolamin, Triethanolamin und deren Gemische ausgewählt ist.

5. Verwendung eines Holzschutzmittels nach einem der Ansprüche 1 bis 4, in dem als Alkanolmonoamin Monoethanolamin verwendet wird.

6. Verwendung eines Holzschutzmittels nach einem der Ansprüche 2 bis 5, in dem die komplexbildende organische Carbonsäure aus der Gruppe Hydroxycarbonsäuren, Aminocarbonsäuren, stickstoffhaltige Polycarbonsäuren, deren Ammonium- und Alkalisalze und deren Gemische ausgewählt ist.

7. Verwendung eines Holzschutzmittels nach Anspruch 6, in dem die komplexbildende organische Carbonsäure aus der Gruppe Glykolsäure, Milchsäure, Äpfelsäure, Weinsäure, Citronensäure, Nitrilotriessigsäure, Ethylendiamintetraessigsäure, Diethylentriaminpentaessigsäure, Propylendiamintetraessigsäure, Hydroxyethylethylendiamintriessigsäure, β-Alanindiessigsäure, Sarkosin, Glycin deren Ammonium- und Alkalisalze und deren Gemische ausgewählt ist.

8. Verwendung eines Holzschutzmittels nach einem der Ansprüche 1 bis 7, in dem das anorganische Fungizid aus der Gruppe Alkaliborate, Aminoborate, Borsäure, Borsäureester, B₂O₃, Alkalifluoride, Alkalibifluoride, Siliciumfluoride, Ammoniumfluoride, Ammoniumhydrogenfluoride, Fluoroborate, Fluorophosphate, Difluorophosphate und deren Gemische ausgewählt ist.

9. Verwendung eines Holzschutzmittels nach einem der Ansprüche 1 bis 8, bestehend aus
| | |
|---|---|
| 2 bis 50 Gew.-% | einer Kupferverbindung, |
| 2 bis 60 Gew.-% | eines Alkanolmonoamin, |
| 1 bis 65 Gew.-% | einer komplexbildenden organischen Carbonsäure oder deren Ammonium- oder Alkalisalze, |
| 0 bis 50 Gew.-% | eines anorganischen Fungizids, |
| 0 bis 25 Gew.-% | eines Alkali-Salzes des N-Cyclohexyldiazeniumdioxids, |
| 0 bis 25 Gew.-% | Hilfsmittel, und |
| 0 bis 50 Gew.-% | Wasser, |
wobei die Summe aller Komponenten jeweils 100 Gew.-% ergibt.

10. Verwendung eines Holzschutzmittels nach einem der Ansprüche 1 bis 9 in Form einer Bandage.

11. Bandage für den Nachschutz von Holz, enthaltend ein Holzschutzmittel gemäß einem der Ansprüche 1 bis 9.

## Claims

1. The use of a wood preservative for the afterprotection of wood, composed of a copper compound, an alkanol monoamine, a complexing organic carboxylic acid or its ammonium or alkali metal salts, if appropriate an inorganic fungicide selected from the group of the boron compounds, fluorides, fluoroborates, fluorophosphates, difluorophosphates and mixtures of these, if appropriate an adjuvant from the group consisting of water, binder, paste-forming agent, mono-, di- and trialkylamine and inorganic bases, aliphatic carboxylic acids, plasticizers, fillers, wetters, thickeners and their mixtures, in a method selected from the group consisting of the bandage method, stab method, bore-hole method and paste methods.

2. The use of a wood preservative as claimed in claim 1, in which the copper compound is selected from the group consisting of copper sulfate, copper acetate, copper citrate, copper naphthenate, copper hydroxide, copper hydroxycarbonate, copper oxychloride, copper oxide, copper borate, copper fluoride, copper fluoroborate, bis(N-cyclohexyldiazeniumdioxy) copper and their mixtures.

3. The use of a wood preservative as claimed in claim 1 or 2, in which the alkanol monoamine is selected from the group consisting of monoethanolamine, diethanolamine, triethanolamine, isopropanolamine, methylethanolamine and mixtures of these.

4. The use of a wood preservative as claimed in claim 3, in which the alkanol monoamine is selected from the group consisting of monoethanolamine, diethanolamine, triethanolamine and mixtures of these.

5. The use of a wood preservative as claimed in any of claims 1 to 4, in which monoethanolamine is used as the alkanol monoamine.

6. The use of a wood preservative as claimed in any of claims 2 to 5, in which the complexing organic carboxylic acid is selected from the group consisting of hydroxycarboxylic acids, aminocarboxylic acids, nitrogen-containing polycarboxylic acids, their ammonium and alkali metal salts, and mixtures of these.

7. The use of a wood preservative as claimed in claim 6, in which the complexing organic carboxylic acid is selected from the group consisting of glycolic acid, lactic acid, malic acid, tartaric acid, citric acid, nitrilotriacetic acid, ethylenediaminetetraacetic acid, diethylenetriaminepentaacetic acid, propylenediaminetetraacetic acid, hydroxyethylethylenediaminetriacetic acid, β-alanindiacetic acid, sarcosine, glycine, their ammonium and alkali metal salts, and mixtures of these.

8. The use of a wood preservative as claimed in any of claims 1 to 7, in which the inorganic fungicide is selected from the group consisting of alkali metal borates, aminoborates, boric acid, boric esters, B₂O₃, alkali metal fluorides, alkali metal bifluorides, silicon fluorides, ammonium fluorides, ammonium hydrogenfluorides, fluoroborates, fluorophosphates, difluorophosphates and mixtures of these.

9. The use of a wood preservative as claimed in any of claims 1 to 8, composed of
| | |
|---|---|
| 2 to 50% by weight of | a copper compound, |
| 2 to 60% by weight of | an alkanol monoamine, |
| 1 to 65% by weight of | a complexing organic carboxylic acid or its ammonium or alkali metal salts, |
| 0 to 50% by weight of | an inorganic fungicide, |
| 0 to 25% by weight of | an alkali metal salt of the N-cyclohexyldiazenium dioxide, |
| 0 to 25% by weight of | an adjuvant and |
| 0 to 50% by weight of | water, |
the total of all the components in each case being 100% by weight.

10. The use of a wood preservative as claimed in any of claims 1 to 9 in the form of a bandage.

11. A bandage for the afterprotection of wood, comprising a wood preservative as claimed in any of claims 1 to 9.

## Revendications

1. Utilisation d'un produit de préservation du bois pour la préservation ultérieure du bois, consistant en un composé du cuivre, une alcanolmonoamine, un acide carboxylique organique formant des complexes ou ses sels d'ammonium ou d'alcalins, éventuellement un fongicide inorganique, choisi dans le groupe des composés du bore, des fluorures, des fluoroborates, des fluorophosphates, des difluorophosphates et de leurs mélanges, éventuellement un adjuvant du groupe de l'eau, des liants, des agents formant des pâtes, des mono-, di- et trialkylamines, ainsi que des bases inorganiques, des acides carboxyliques aliphatiques, des plastifiants, des charges, des agents réticulants, des épaississants et de leurs mélanges, dans un procédé choisi dans le groupe des procédés de bandage, des procédés d'injection ou inoculation, des procédés de forage et des procédés d'application de pâte.

2. Utilisation d'un produit de préservation du bois selon la revendication 1, dans laquelle le composé du cuivre est choisi dans le groupe des sulfate de cuivre, acétate de cuivre, citrate de cuivre, naphténate de cuivre, hydroxyde de cuivre, hydroxycarbonate de cuivre, oxychlorure de cuivre, oxyde de cuivre, borate de cuivre, fluorure de cuivre, fluoroborate de cuivre, bis(N-cyclohexyldiazénium-dioxy)-cuivre et leurs mélanges.

3. Utilisation d'un produit de préservation du bois selon l'une des revendications 1 ou 2, dans laquelle l'alcanolmonoamine est choisie dans le groupe des monoéthanolamine, diéthanolamine, triéthanolamine, isopropanolamine, méthyléthanol-amine et leurs mélanges.

4. Utilisation d'un produit de préservation du bois selon la revendication 3, dans laquelle l'alcanolmonoamine est choisie dans le groupe des monoéthanolamine, diéthanolamine, triéthanolamine et leurs mélanges.

5. Utilisation d'un produit de préservation du bois selon l'une des revendications 1 à 4, dans laquelle on utilise la monoéthanolamine comme alcanolmonoamine.

6. Utilisation d'un produit de préservation du bois selon l'une des revendications 2 à 5, dans laquelle l'acide carboxylique organique formant des complexes est choisi dans le groupe des acides hydroxycarboxyliques, des acides amino-carboxyliques, des acides polycarboxyliques contenant de l'azote, de leurs sels d'ammonium et d'alcalins, et de leurs mélanges.

7. Utilisation d'un produit de préservation du bois selon la revendication 6, dans laquelle l'acide carboxylique organique formant des complexes est choisi dans le groupe de l'acide glycolique, l'acide lactique, l'acide malique, l'acide tartrique, l'acide citrique, l'acide nitrilo-triacétique, l'acide éthylènediaminetétraacétique, l'acid diéthylènetriaminepentaacétique, l'acide propylènediaminetétraacétique, l'acide hydroxyéthyléthylènediaminetri- acétique, l'acide β-alaninediacétique, la sarcosine, la glycine, leurs sels d'ammonium et d'alcalins, et leurs mélanges.

8. Utilisation d'un produit de préservation du bois selon l'une des revendications 1 à 7, dans laquelle le fongicide inorganique est choisi dans le groupe des borates d'alcali, aminoborates, acide borique, esters d'acide borique, B₂O₃, fluorures d'alcali, bifluorures d'alcali, fluorures de silicium, fluorures d'ammonium, hydrogénofluorures d'ammonium, fluoroborates, fluorophosphates, difluorophosphates et leurs mélanges.

9. Utilisation d'un, produit de préservation du bois selon l'une des revendications 1 à 8, consistant en
| | |
|---|---|
| 2 à 50 % en poids | d'un composé du cuivre, |
| 2 à 60 % en poids | d'une alcanolmonoamine, |
| 1 à 65 % en poids | d'un acide carboxylique organique formant des complexes ou de ses sels d'ammonium ou d'alcali, |
| 0 à 50 % en poids | d'un fongicide inorganique, |
| 0 à 25 % en poids | d'un sel d'alcali du dioxyde de N-cyclohexyldiazénium, |
| 0 à 25 % en poids | d'adjuvant, et |
| 0 à 50 % en poids | d'eau, |
tandis que la somme de tous les composants donne à chaque fois 100 % en poids.

10. Utilisation d'un, produit de préservation du bois selon Tune des revendications 1 à 9, sous forme d'un bandage.

11. Bandage pour la préservation ultérieure du bois, contenant un produit pour la préservation du bois selon l'une des revendications 1 à 9.
